# DEMANDE DE BREVET EUROPEEN

(11) **EP 4 009 686 A1**
(43) Date de publication de la demande: **08.06.2022**
(21) Numéro de dépôt: 21211897.0
(22) Date de dépôt: 02.12.2021
(51) Int. Cl.: H04W 12/50, H04W 12/77, H04W 84/12

(54) **PROCÉDÉ DE CONNEXION À UN ÉQUIPEMENT, DISPOSITIF ASSOCIÉ**

(30) Priorité: 03.12.2020 FR 2012643
(71) Demandeur: Exel Industries, 51200 Epernay (FR)
(72) Inventeur: FERRERE, Nicolas, 75009 PARIS (FR); BAIDAOUI, Ahmed, 75009 PARIS (FR); MESBAHI, Faouzia, 75009 PARIS (FR); LOUIS, Maycko, 75009 PARIS (FR); MANCEL, Ilana, 75009 PARIS (FR)
(74) Mandataire: Lavoix

(57) **Abrégé**

Ce procédé de connexion à un équipement au moyen d'un terminal électronique comporte des étapes consistant à :
- acquérir (102), au moyen d'un capteur d'image du terminal électronique, une image d'un indicateur visuel affiché par l'équipement, l'indicateur visuel comportant, sous forme codée, des identifiants de connexion pour établir une liaison de communication avec l'équipement ;
- par une application logicielle installée sur le terminal électronique, extraire (104) les identifiants de connexion de l'image acquise,
- au moyen des identifiants de connexion, établir (106) une liaison de communication locale sans fil entre une interface de communication du terminal électronique et une interface de communication (12) d'un contrôleur électronique de l'équipement.

## Description

La présente invention concerne un procédé de connexion à un équipement. L'invention concerne également un dispositif pour mettre en œuvre un tel procédé de connexion.

L'invention s'applique tout particulièrement à des équipements industriels ou des équipements agricoles, tels que des machines-outils ou des engins agricoles, par exemple pour permettre à un utilisateur d'accéder, de façon sécurisée, à des données relatives de l'équipement, telles que des données relatives au fonctionnement de l'équipement ou à la maintenance de l'équipement, voire même pour piloter cet équipement à distance, bien que de nombreuses autres applications soient possibles.

Dans de nombreuses applications, par exemple dans le cas de machines industrielles ou agricoles, un contrôleur électronique est embarqué dans la machine. Ce contrôleur électronique est en communication avec un serveur informatique distant, par exemple un serveur géré par le propriétaire ou le gestionnaire de la machine, afin d'échanger des données générées par la machine. Un utilisateur peut ensuite avoir accès à ces données en se connectant au serveur.

Un inconvénient est qu'il est nécessaire d'établir une liaison de communication sécurisée entre la machine et le serveur informatique. Cela peut être compliqué à mettre en œuvre dans certaines circonstances, par exemple pour des raisons de coût ou pour des raisons pratiques. D'une part, il est nécessaire de faire en sorte que seules les personnes autorisées puissent se connecter. D'autre part, dans certains environnements, notamment dans des applications industrielles ou agricoles, il arrive parfois qu'aucune connexion vers un serveur informatique distant ne puisse être établie, par exemple parce que la machine agricole se situe dans une région ne disposant pas de couverture réseau adéquate.

C'est à ces inconvénients qu'entend plus particulièrement remédier l'invention en proposant un procédé permettant d'établir de façon simple et sûre une liaison de communication entre un équipement et un terminal électronique.

A cet effet, un aspect de l'invention concerne un procédé de connexion à un équipement au moyen d'un terminal électronique, ce procédé comportant des étapes consistant à :
- acquérir, au moyen d'un capteur d'image du terminal électronique, une image d'un indicateur visuel affiché par un équipement, l'indicateur visuel comportant, sous forme encodée, des identifiants de connexion pour établir une liaison de communication avec l'équipement;
- par une application logicielle installée sur le terminal électronique, extraire les identifiants de connexion de l'image acquise,
- au moyen des identifiants de connexion, établir une liaison de communication locale sans fil entre une interface de communication du terminal électronique et une interface de communication d'un contrôleur électronique de l'équipement.

Selon des aspects avantageux mais non obligatoires, un tel système de surveillance peut incorporer une ou plusieurs des caractéristiques suivantes, prises isolément ou suivant toute combinaison techniquement admissible :
- La liaison de communication est une liaison radio, de préférence de courte portée, telle qu'une liaison Bluetooth ou une liaison Wi-Fi.
- Les identifiants de connexion sont chiffrés dans l'indicateur visuel, et dans lequel l'extraction des identifiants de connexion de l'image acquise comporte l'utilisation d'informations de chiffrement contenues dans l'application logicielle.
- L'indicateur visuel est un code graphique, tel qu'un QR-code, ou un code à barres, ou une image, ou une photographie numérique.
- L'indicateur visuel est affiché sur un écran de l'équipement.
- Une fois la liaison de communication établie, l'application logicielle du terminal électronique est autorisée à échanger des données avec le contrôleur électronique de l'équipement.
- L'échange de données entre le contrôleur électronique de l'équipement comporte la réception, par le terminal électronique, de données générées par l'équipement, telles que des données de maintenance.
- Une fois la liaison de communication établie, le contrôleur électronique de l'équipement et l'application logicielle échangent des données directement, sans transiter par un autre appareil de communication.
- L'équipement cible est un équipement industriel ou un équipement agricole.

Selon un autre aspect, l'invention concerne un système, comportant un équipement, tel qu'un équipement industriel ou un équipement agricole, et un terminal électronique, le terminal électronique étant configuré pour mettre en œuvre des étapes consistant à :
- acquérir, au moyen d'un capteur d'image du terminal électronique, une image d'un indicateur visuel affiché par l'équipement, l'indicateur visuel comportant, sous forme encodée, des identifiants de connexion pour établir une liaison de communication avec l'équipement ;
- par une application logicielle installée sur le terminal électronique, extraire les identifiants de connexion de l'image acquise,
- au moyen des identifiants de connexion, établir une liaison de communication locale sans fil entre une interface de communication du terminal électronique et une interface de communication d'un contrôleur électronique de l'équipement.

L'invention sera mieux comprise et d'autres avantages de celle-ci apparaîtront plus clairement à la lumière de la description qui va suivre d'un mode de réalisation d'un système de surveillance donnée uniquement à titre d'exemple et faite en référence aux dessins annexés, dans lesquels :
[Fig 1] la figure 1 représente schématiquement un exemple d'un système associant un équipement industriel ou agricole à un terminal électronique, conformément à un mode de réalisation de l'invention ;
[Fig 2] la figure 2 représente schématiquement un procédé de connexion entre le terminal électronique et l'équipement industriel ou agricole de la figure 1, conformément à un mode de réalisation de l'invention.

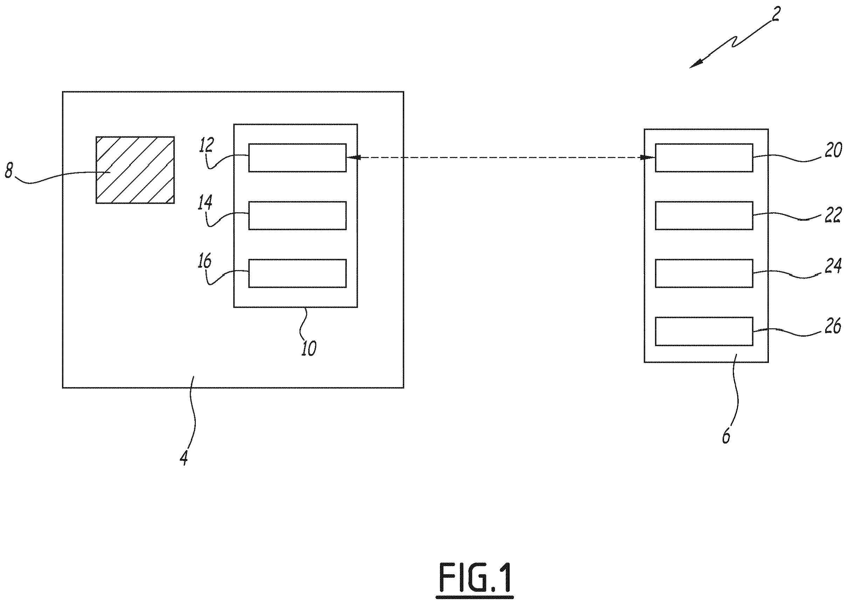

La figure 1 représente un système 2 associant un équipement 4 à un terminal électronique 6.

Dans de nombreux modes de réalisation, l'équipement 4 peut être un équipement industriel, tel qu'une machine-outil, ou un équipement agricole, ou tout équipement ou machine équivalent.

Par exemple, l'équipement 4 est une machine de peinture industrielle dans une ligne de production industrielle, notamment pour l'industrie automobile.

En variante, l'équipement 4 pourrait être une machine agricole 4.

Ces exemples ne sont pas limitatifs et, en variante, l'invention peut être transposée à d'autres types d'équipements.

Le terminal électronique 6 est ici un terminal utilisateur. Il peut s'agir d'un dispositif de communication mobile, tel qu'un téléphone mobile, notamment un smartphone, ou une tablette électronique, ou un ordinateur portable, ou tout dispositif équivalent.

En pratique, l'équipement 4 comporte des dispositifs et des composants qui lui permettent d'assurer une ou plusieurs fonctions principales. Ces dispositifs et composants peuvent être de nature mécanique, ou électromécanique, ou électronique, ou équivalent.

Par exemple, dans le cas d'un équipement industriel, tel qu'une machine de peinture industrielle, l'équipement 4 peut comporter un système de projection de peinture ainsi que des composants d'actionnement et de mesure, tels que des pompes, des vannes, des capteurs, tels que des débitmètres, ou tout élément analogue.

Ces dispositifs et composants ne sont toutefois pas décrits en détail dans ce qui suit.

L'équipement 4 comporte aussi un écran d'affichage 8, qui est notamment configuré pour afficher un indicateur visuel ou graphique, tel qu'un QR-code ou un code à barres, dont le rôle sera expliqué en détail dans ce qui suit.

Par exemple, l'écran d'affichage 8 est un écran à cristaux liquides, ou un écran à diodes organiques (OLED), ou un écran utilisant toute technologie d'affichage équivalente.

L'écran d'affichage 8 peut être un écran tactile, bien que cela ne soit pas nécessaire.

L'équipement 4 comporte également un contrôleur électronique 10, de préférence configuré pour superviser et/ou contrôler le fonctionnement des composants principaux de l'équipement 4.

Dans de nombreux modes de réalisation, le contrôleur électronique 10 permet ainsi de collecter des données générées par l'équipement 4 pendant son fonctionnement, telles que des données de maintenance se rapportant à l'état d'usure d'un ou de plusieurs composants et dispositifs de l'équipement 4.

Par exemple, dans le cas précédemment mentionné où l'équipement 4 est une machine de peinture industrielle, les données de maintenance peuvent se rapporter à un nombre de cycles d'utilisation de certains composants mécaniques ou électromécaniques, tels que des vannes ou des pompes.

Cet exemple n'est pas limitatif et d'autres types de données peuvent être définies en fonction de la nature de l'équipement 4 et de son utilisation.

Dans d'autres exemples de réalisation, le contrôleur électronique 10 peut autoriser le pilotage à distance de toute ou partie de l'équipement 4, en fonction d'ordres de commande reçus par l'intermédiaire de l'interface de communication 12.

Le contrôleur électronique 10 est couplé à l'écran d'affichage 8 et comporte une interface de communication 12, une mémoire 14 et un processeur 16.

Par exemple, le processeur 16 est un microcontrôleur programmable. La mémoire 14 comporte des instructions exécutables et/ou un code logiciel prévu pour mettre en œuvre un ou plusieurs des procédés décrits ci-après lorsque ces instructions sont exécutées par le processeur.

L'emploi du terme « processeur » ne fait pas obstacle à ce qu'en variante, au moins une partie des fonctions du contrôleur 10 soit assurée par un processeur de traitement du signal (DSP), ou par un composant logique reprogrammable (FPGA), ou par un circuit intégré spécialisé (ASIC), ou par tout élément équivalent.

L'interface de communication 12 est configurée pour permettre l'établissement d'une liaison de communication sans fil avec le terminal électronique 6. De préférence, la liaison de communication est une liaison radio, notamment une liaison de courte portée.

Par exemple, la liaison de communication est une liaison Wi-Fi. En variante, la liaison de communication peut être une liaison Bluetooth^{®}, ou de tout protocole de communication radio approprié.

En pratique, l'interface de communication 12 peut comporter une antenne radio, ou peut être connecté à un dispositif d'émission/réception radio.

Dans le cas où la liaison de communication est une liaison Wi-Fi, alors l'interface de communication 12 peut être configurée pour fonctionner comme un point d'accès Wi-Fi permettant un accès local aux ressources de l'équipement 4. De préférence, l'accès peut être restreint en imposant l'utilisation d'un mot de passe pour permettre l'établissement d'une connexion.

De façon générale, l'interface de communication 12 est configurée pour établir une liaison de communication point à point entre l'équipement 4 et le terminal électronique 6.

Préférentiellement, la liaison de communication est une liaison de communication locale, c'est-à-dire que, lorsque la liaison de communication est établie entre le terminal électronique 6 et le contrôleur électronique 10, les données échangées circulent directement entre le terminal électronique 6 et le terminal électronique 10, sans transiter par un autre appareil tel qu'un serveur distant, ou sans transiter par un autre réseau de communication, tel qu'un réseau local ou par internet.

Le contrôleur électronique 10 est configuré pour générer automatiquement un indicateur visuel ou graphique, comportant, sous forme encodée, des identifiants de connexion permettant à un autre appareil, tel que le terminal électronique 6, d'établir une liaison de communication avec l'interface de communication 12, et donc avec l'équipement 4.

L'indicateur visuel ou graphique est de préférence un code matriciel tel qu'un QR-code, mais en variante il pourrait s'agir d'un code à barres, ou d'une image, ou d'une photographie numérique, ou de tout support d'information graphique.

Au sens de la présente description, l'expression « sous forme encodée » signifie ici que les identifiants de connexion sont encodés, ou chiffrés, ou cryptés, dans l'indicateur graphique, comme on le comprendra dans ce qui suit.

Dans ce qui suit, la référence 8 pourra être utilisée pour désigner l'indicateur visuel affiché sur l'écran 8.

Par exemple, les identifiants de connexion peuvent comporter une ou plusieurs des données suivantes, qui peuvent être stockées dans la mémoire 14 du contrôleur électronique 10 : un numéro de série de l'équipement 4, une adresse réseau, un identifiant matériel de l'interface 12 (tel qu'une adresse MAC), un mot de passe (notamment, un mot de passe attendu par l'interface 12 pour autoriser l'établissement d'une connexion), ou tout élément approprié.

Le contrôleur électronique 10 est également configuré pour afficher, sur l'écran 8, l'indicateur visuel généré. L'indicateur peut être affiché en permanence, ou n'être affiché qu'en réponse à une action d'un utilisateur au moyen d'une interface de l'équipement 4 (par exemple, appui sur un bouton ou sur un écran tactile).

Préférentiellement, si un ou plusieurs des identifiants de connexion est modifié, alors le contrôleur électronique 10 peut générer un nouvel indicateur visuel contenant les identifiants de connexion mis à jour, et affiche ce nouvel indicateur visuel 8 en remplacement du précédent indicateur visuel.

Comme expliqué précédemment, l'indicateur visuel est chiffré ou crypté par le contrôleur électronique 10, c'est-à-dire que les identifiants de connexion sont codés dans l'indicateur visuel de telle sorte qu'ils ne sont pas directement lisibles ni extractibles sans posséder des informations de chiffrement adéquates, telle qu'une clé de chiffrement.

Cela permet d'éviter que des tierces personnes non autorisées ne puissent accéder aux informations de connexion.

Comme illustré sur la figure 1, le terminal électronique 6 comporte une interface de communication 20, un capteur d'image 22, un processeur 24, une mémoire, et une application logicielle 26.

De préférence, l'interface de communication 20 est compatible avec l'interface de communication 12 du contrôleur électronique 10 de l'équipement 4 et permet l'établissement de la liaison de communication précédemment décrite.

Par exemple, le capteur 22 comporte une caméra.

Le processeur 24 joue ici un rôle similaire au processeur 14 du contrôleur électronique 10, de sorte que la description qui en a été faite ci-dessus peut être transposée au processeur 24.

L'application 26 peut être exécutée par le processeur 24 à partir de code logiciel et/ou d'instructions exécutables stockées dans la mémoire du terminal électronique 6.

Avantageusement, l'application 26 comporte des informations de chiffrement adéquates, telle qu'une clé de chiffrement, permettant d'extraire le contenu chiffré de l'indicateur visuel affiché sur l'écran 8.

L'application 26 peut également être programmée pour afficher, sur un écran du terminal électronique 6, une interface homme-machine permettant à un utilisateur d'accéder aux données et/ou aux fonctionnalités de l'équipement 4.

De façon générale, le terminal électronique 6 est configuré, notamment au moyen de l'application logicielle 26, pour mettre en œuvre des étapes consistant à :
- acquérir, au moyen du capteur d'image 22, une image de l'indicateur visuel affiché par l'écran 8 ;
- extraire les identifiants de connexion de l'image acquise, en utilisant lesdites informations de chiffrement ;
- au moyen des identifiants de connexion, établir une liaison de communication locale sans fil entre l'interface de communication 20 et l'interface de communication 12.

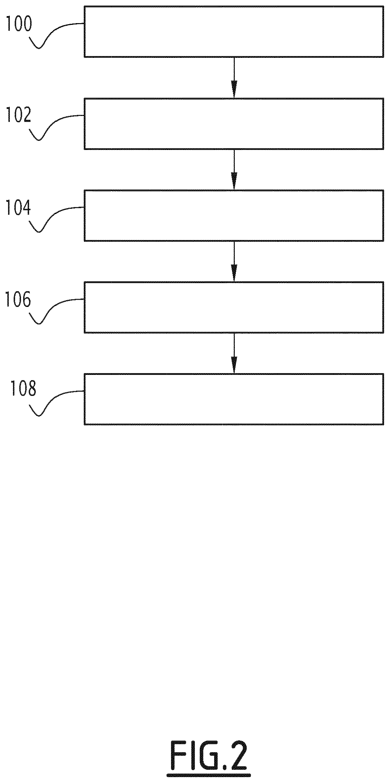

La figure 2 représente un exemple d'un procédé pour établir une liaison de communication entre le terminal électronique 6 et l'équipement 4 (« équipement cible »).

Le procédé débute à l'étape 100, avec une requête d'un utilisateur souhaitant établir une liaison de communication entre le terminal électronique 6 et l'équipement 4.

Par exemple, pour envoyer la requête, l'utilisateur agit sur l'interface homme-machine proposée par l'application 26, en appuyant sur un élément d'interface tel qu'un bouton ou un menu.

Le capteur d'image 22 est alors activé. De préférence, le terminal électronique 6 est approché de l'équipement 4 par l'utilisateur.

Ensuite, lors d'une étape 102, une image de l'indicateur visuel 8 affiché par l'équipement 4 est acquise par le capteur d'image 12.

Par exemple, l'image acquise peut être traitée par des fonctions ou routines logicielles d'un programme du terminal électronique 6, pour prétraiter l'image acquise et appliquer des corrections (retirer des bords, filtrer des défauts, etc.) et convertir l'information sous forme graphique par le QR code ou le code à barres en une information sous une autre forme, par exemple sous forme d'une chaîne de caractères. Ces opérations peuvent être réalisées avec des fonctions connues. Toutefois, à ce stade, les données extraites ne sont pas immédiatement exploitables, et il n'est notamment pas possible d'accéder aux identifiants de connexion, qui sont encore sous forme chiffrée.

Ensuite, lors d'une étape 104, les identifiants de connexion sont extraits de l'image acquise, cette extraction étant réalisée grâce à l'application logicielle 26.

De préférence, comme les identifiants de connexion sont chiffrés dans l'indicateur visuel, lequel l'extraction des identifiants de connexion de l'image acquise est réalisée en utilisant les informations de chiffrement contenues dans l'application logicielle.

Il est ici entendu que ces informations de chiffrement, telle que la clé de chiffrement, sont préalablement enregistrées dans l'application logicielle 26, par exemple par un éditeur de l'application 26. On comprend également que le contrôleur 10 possède des informations de chiffrement correspondantes, et que c'est avec ces informations là que les identifiants de connexion sont chiffrés et encodés dans l'indicateur visuel 8.

Ensuite, dans une étape 106, le terminal électronique 6 établit, au moyen des identifiants de connexion extraits, la liaison de communication locale sans fil entre l'interface de communication 20 du terminal électronique l'interface de communication 12 du contrôleur électronique 10.

Dans l'exemple illustré, à l'étape 108, une fois la liaison de communication établie, l'application logicielle 26 du terminal électronique est autorisée à échanger des données avec le contrôleur électronique 10.

Notamment, le contrôleur électronique 10 de l'équipement et l'application logicielle 26 échangent des données directement, sans transiter par un autre appareil de communication ou par un autre réseau de communications. Autrement dit, la liaison de communication est une liaison point à point.

Selon des exemples, l'échange de données entre le contrôleur électronique de l'équipement comporte la réception, par le terminal électronique, de données générées par l'équipement, telles que des données de maintenance.

Notamment, l'application 26 du terminal électronique 6 peut générer des alertes, ou afficher des notifications, à destination de l'utilisateur, lorsqu'un fonctionnement anormal est détecté sur l'équipement 4, ou par exemple lorsqu'une opération de maintenance préventive est identifiée comme étant nécessaire, par exemple lorsque le niveau d'usure d'une pièce ou d'un composant de l'équipement dépasse un seuil prédéfini.

Selon d'autres exemples, l'application 26 du terminal électronique 6 peut envoyer des ordres de commande à destination du contrôleur 10, afin de piloter à distance l'équipement 4.

Grâce à l'invention, une liaison de communication entre un équipement 4 et un terminal électronique 6 peut être établie de façon simple et rapide par un utilisateur. Les identifiants de connexion requis pour établir la communication sont affichés par l'équipement, et peuvent être capturés automatiquement par le terminal 6, tout en étant protégés et à l'abri d'une interception par une tierce partie non autorisée. Ainsi, seuls les utilisateurs autorisés possédant l'application 26 peuvent se connecter à l'équipement 4.

En outre, le fait que la liaison de connexion soit une liaison point à point, locale et de préférence de courte portée, est particulièrement avantageux d'un point de vue de la sécurité, car cela évite que les informations ne transitent par des équipements ou des réseaux appartenant à des tierces parties. De plus, la connexion peut être établie directement, même lorsqu'aucun réseau extérieur n'est disponible, ce qui est utile lorsque l'équipement est dans un lieu isolé, ce qui est parfois le cas avec les engins agricoles.

De nombreux autres modes de réalisation sont possibles.

En variante, les étapes des procédés décrits ci-dessus pourraient être exécutées dans un ordre différent. Certaines étapes pourraient être omises. Les exemples décrits ne font pas obstacle à ce que, dans d'autres modes de réalisation, d'autres étapes soient mises en œuvre conjointement et/ou séquentiellement avec les étapes décrites.

Les modes de réalisation et les variantes envisagés ci-dessus peuvent être combinés entre eux pour créer de nouveaux modes de réalisation.

## Revendications

1. Procédé de connexion à un équipement (4) au moyen d'un terminal électronique (6), ce procédé comportant des étapes consistant à :
- acquérir (102), au moyen d'un capteur d'image (22) du terminal électronique, une image d'un indicateur visuel (8) affiché par l'équipement, l'indicateur visuel comportant, sous forme encodée, des identifiants de connexion pour établir une liaison de communication avec l'équipement ;
- par une application logicielle (26) installée sur le terminal électronique, extraire (104) les identifiants de connexion de l'image acquise,
- au moyen des identifiants de connexion, établir (106) une liaison de communication locale sans fil entre une interface de communication (20) du terminal électronique et une interface de communication (12) d'un contrôleur électronique (10) de l'équipement.

2. Procédé selon la revendication 1, dans lequel la liaison de communication est une liaison radio, de préférence de courte portée, telle qu'une liaison Bluetooth ou une liaison Wi-Fi.

3. Procédé selon la revendication 1 ou la revendication 2, dans lequel les identifiants de connexion sont chiffrés dans l'indicateur visuel (8), et dans lequel l'extraction (104) des identifiants de connexion de l'image acquise comporte l'utilisation d'informations de chiffrement contenues dans l'application logicielle.

4. Procédé selon l'une quelconque des revendications précédentes, dans lequel l'indicateur visuel est un code graphique, tel qu'un QR-code, ou un code à barres, ou une image, ou une photographie numérique.

5. Procédé selon l'une quelconque des revendications précédentes, dans lequel l'indicateur visuel est affiché sur un écran (8) de l'équipement.

6. Procédé selon l'une quelconque des revendications précédentes, dans lequel, une fois la liaison de communication établie, l'application logicielle (26) du terminal électronique est autorisée (108) à échanger des données avec le contrôleur électronique de l'équipement.

7. Procédé selon la revendication précédente, dans lequel l'échange (108) de données entre le contrôleur électronique de l'équipement comporte la réception, par le terminal électronique, de données générées par l'équipement, telles que des données de maintenance.

8. Procédé selon l'une quelconque des revendications précédentes, dans lequel, une fois la liaison de communication établie, le contrôleur électronique de l'équipement et l'application logicielle échangent (108) des données directement, sans transiter par un autre appareil de communication.

9. Procédé selon l'une quelconque des revendications précédentes, dans lequel l'équipement cible (4) est un équipement industriel ou un équipement agricole.

10. Système (2), comportant un équipement (4), tel qu'un équipement industriel ou un équipement agricole, et un terminal électronique (6), le terminal électronique étant configuré pour mettre en œuvre des étapes consistant à :
- acquérir (102), au moyen d'un capteur d'image (22) du terminal électronique, une image d'un indicateur visuel (8) affiché par l'équipement, l'indicateur visuel comportant, sous forme encodée, des identifiants de connexion pour établir une liaison de communication avec l'équipement ;
- par une application logicielle (26) installée sur le terminal électronique, extraire (104) les identifiants de connexion de l'image acquise,
- au moyen des identifiants de connexion, établir (106) une liaison de communication locale sans fil entre une interface de communication (20) du terminal électronique et une interface de communication (12) d'un contrôleur électronique (10) de l'équipement.
